# EUROPEAN PATENT APPLICATION

(11) **EP 3 925 770 A2**
(43) Date of publication of application: **22.12.2021**
(21) Application number: 21167131.8
(22) Date of filing: 07.04.2021
(51) Int. Cl.: B32B 5/06, A47G 27/02, A47G 27/04, B60N 3/04, D06N 7/00, E04F 13/08, E04F 15/02, B32B 3/08, B32B 3/30, B32B 5/02, B32B 7/08, B32B 25/10, A44B 18/00, B32B 3/06, B32B 7/022

(54) **COVERING FOR SURFACES AND RELATED LAYING METHOD**

(30) Priority: 22.04.2020 IT 202000008671
(71) Applicant: Radici Pietro Industries & Brands S.p.A., 24026 Cazzano Sant'Andrea (IT)
(72) Inventor: RADICI, Marco Antonio, 24026 CAZZANO SANT'ANDREA (IT)
(74) Representative: Tirloni, Bartolomeo

(57) **Abstract**

Coating (100) for surfaces comprising
- a composite layer (1) comprising a support layer (2), textile threads (5) woven by tufting in the support layer (2), a fastening layer (3) placed at opposite side of the support layer (2) with respect to the textile threads (5), a fixing layer (4) interposed between the support layer (2) and the fastening layer (3) for fixing to each other the support layer (2) and the fastening layer (3);
- a plurality of anchoring elements (6), wherein each anchoring element (6) comprises a first face (7) covered by a plurality of anchoring units (10) for detachably hooking the anchoring element (6) with the fastening layer (3), and a second face covered by an adhesive layer (8) for firmly fixing the anchoring element (6) to the surface (700), wherein the fastening layer (3) is a non-woven fabric, made of tangled fibres of polymeric material, and wherein the anchoring units (10) detachably and directly hook the tangled fibres of the fastening layer (3).

## Description

### Technical field of the invention

The present invention relates to a coating for surfaces, in particular walkable surfaces, and to a related laying method of a coating for surfaces.

### State of the art

Coating for surfaces means a coating (e.g., carpet and/or moquette) comprising (e.g., natural and/or synthetic) textile fibres woven for creating a walkable and/or aesthetic surface, for example as used in the construction of flooring for residential use (e.g., hotels, residences, private homes, offices etc.) and/or for naval use (e.g., cabins, internal corridors, covered common areas).

Typically, the structure of a carpet and/or moquette type coating for surfaces comprises a composite layer comprising a support layer for the fibres (commonly called primary backing) and a structural layer (commonly called secondary backing), typically glued to the support layer. For installing the coating, the structural layer is directly and permanently (e.g., by glue and/or adhesives) fixed to a rigid and compact surface, e.g., the floor and/or the walls.

Coatings for surfaces which are detachably fixed to the surface are also known, such as for example disclosed in GB1546901A, DE19600106B1, EP0321978B1 and CN203646634U.

In the manufacturing of such detachable coating, it is known gluing (e.g., by glues and/or adhesives) the anchoring elements to the rigid surface and detachably hooking (e.g., before or after having glued the anchoring elements to the surface) the composite layer to the anchoring elements, thanks to a detachably hooking system with loops and hooks (for example of the type marketed under the Velcro^{®} brand) arranged between the structural layer and the anchoring elements. The mechanical interaction between loops and hooks (or similar) allows a detachable hook of the composite layer to the anchoring elements, for, if necessary, being able to remove (more simply than in the case of direct gluing to the floor) the composite layer by pulling it with a sufficient force for mechanically separating the loops from the hooks.

### Summary of the invention

The Applicant has found that the known detachable coatings for surfaces and the known laying methods of a detachable coating for surfaces have some drawbacks and/or can be improved in one or more aspects.

Despite numerous attempts in recent decades to manufacture a detachable coating for surfaces, the Applicant has found that, to its knowledge, nowadays no detachable fixing coating is commercially available which has characteristics such as to constitute a valid and feasible alternative to the permanent fixing coatings.

The Applicant believes that this is due to the fact that, despite the various attempts occurred over time, none of the developed coatings shows at the same time the desired characteristics in terms of practicality, sturdiness, long-term fixing reliability and cost.

For example, according to the Applicant, the production of the coatings for surfaces disclosed in GB1546901A and EP0321978B1 requires a dedicated weaving and/or punching and/or inclusion step of a plurality of loops (or noose) inside the structural layer, which is also made of (woven and/or non-woven) textile material. The hooking of the composite layer to the anchoring elements takes place by mechanical interaction between anchoring units (e.g., hooks, clip, mushrooms, etc.) present on the anchoring elements and the aforesaid plurality of loops specially woven and/or punched and/or included in the structural layer using threads or fibres (e.g., staple fibres of nylon and/or polyester pile and/or polypropylene pile), these threads or fibres not contributing to manufacturing the structural layer. The weaving and/or punching and/or inclusion step of the loops therefore entails a disadvantage in terms of lengthening of the production process with a consequent increase in the costs of the finished product. Furthermore, the presence of the loops can lead to a poor overall compactness and/or sturdiness of the coating (in particular over the long term), as well as being aesthetically unpleasant (especially for a residential use wherein the coating is typically frequently removed).

Furthermore, the Applicant has found that the desired hooking sturdiness between the composite layer and the anchoring elements can lead, especially in case of repeated hooking/unhooking operations of the composite layer itself (as can happen in particular in a residential environment), a damaging of the loops of the known art, for example a weakening of the aforesaid woven/punched/included loops which tend to elongate and/or unthread at one or both the ends and/or to break. This can lead to a consequent loss of locking capacity with the hooks (i.e., due to breaking and/or damaging of the loops). Furthermore, in case of total detachment of the aforesaid loops, these can remain hooked to the hooks, thus causing their clogging and functionality loss, with consequent (progressive) decrease in effectively hooking the composite layer.

Moreover, this weakening can be aesthetically unpleasant.

Furthermore, according to the Applicant, the detachable coatings for surfaces disclosed in GB1546901A, DE19600106B1 and EP0321978B1, require a high number of anchoring elements arranged substantially at most and/or all the surface of the fastening layer, for ensuring sufficient overall fixing sturdiness. This entails a high amount of material and/or a lengthening of the time required for laying the coating.

Object of the present invention is providing a coating for surfaces which quickly and simply allows a sturdy and detachable fixing of the composite layer, while being simple and/or quick and/or cheap to be produce and/or to be laid.

Object of the present invention is providing a coating for surfaces which quickly and simply allows a sturdy and detachable fixing of the composite layer, while having a high structural compactness and/or sturdiness, as well as providing appropriate aesthetic characteristics.

Object of the present invention is providing a coating for surfaces which quickly and simply allows a sturdy and detachable fixing of the composite layer, which maintain over time the characteristics of fixing sturdiness, of compactness and of aesthetic appeal, even in face of repeated hooking and unhooking operations.

According to the Applicant the problem of realizing one or more these objects is solved by a coating for surfaces and/or by a laying method of a coating for surfaces according to the attached claims and/or having one or more of the following features.

According to an aspect the invention relates to a coating for surfaces comprising:
- a composite layer comprising:
   - a support layer;
   - textile threads woven by tufting in said support layer;
   - a fastening layer placed at opposite side of said support layer with respect to said textile threads;
   - a fixing layer interposed between said support layer and said fastening layer for fixing to each other said support layer and said fastening layer;
   and
- a plurality of anchoring elements, wherein each anchoring element comprises a first face covered by a plurality of anchoring units for detachably hooking said anchoring element with said fastening layer, and a second face covered by an adhesive layer for firmly fixing said anchoring element to said surface.

Preferably said fastening layer is a non-woven fabric, (at least partially or entirely) made of tangled fibres of polymeric material.

Preferably said anchoring units detachably and directly hook said tangled fibres of the fastening layer.

According to an aspect the invention relates to a laying method of a coating for surfaces according to the present invention.

The laying method comprises:
- firmly fixing, by said adhesive layer, said anchoring elements to said surface;
- detachably hooking said composite layer to said anchoring elements by detachable hook between said anchoring units and said tangled fibres of the fastening layer.

According to an aspect the invention relates to a surface covered with a coating for surfaces according to the present invention, wherein said anchoring elements are firmly fixed to said surface by said adhesive layers and wherein said composite layer is detachably hooked to said anchoring elements by detachable hook between said anchoring units and said tangled fibres of said fastening layer. Preferably said surface is walkable.

"Detachable" or similar referred to the fixing or hooking of a first element to a second element means that this first element is firmly fixed or hooked to the second element, but it can be quickly and easily detached or unhooked, for example by a manual action of moderate effort and without the use of tools, and in a globally non-destructive way of the first and second element, so that the first element can again be quickly and easily firmly fixed or hooked to the second element, for example without the use of tools or materials (such as glues or adhesives or nails), without substantial alteration of the mechanical and/or aesthetic properties.

The Applicant has surprisingly found that the tangled fibres which make up the structure of the non-woven fabric are suitable for ensuring the detachable and sturdy hooking with the anchoring units. On the contrary, in the known art, inserting in the secondary backing a plurality of loops specially dedicated and designed for hooking onto the anchoring units (hooks, mushroom heads, etc.) has always been felt needed, these loops constituting an additional structure with respect to the structure of the secondary backing. In the present invention, on the other hand, the Applicant has found that the anchoring units can be fully-functionally hooked directly to the structure of a non-woven fabric, mainly or entirely made of a tangle of fibres randomly and loosely tangled to each other. According to the Applicant, the detachable and effective hooking is achieved since the anchoring units, when interacting with the non-woven fabric of the fastening layer, penetrate in the tangle of fibres and mechanically interact with a group of fibres interconnected to each other. The tangled structure of the group of fibres hooked by the anchoring unit opposes to the unthreading of the fibres themselves, thus globally making a firm and sufficiently sturdy hook. When the detachment force exceeds the resistance offered by the hooked fibres (which therefore stretch and/or unthread at least one end and/or break), it is possible unhooking the composite layer from the anchoring elements. Upon subsequent hooking, each anchoring unit hooks a new group of fibres which at least partly comprises fibres still linked to the tangle of fibres.

According to the Applicant, this allows eliminating the procedural step specifically dedicated to the weaving and/or punching and/or inclusion of the loops of the known art in the structural layer. This leads to a greater simplicity and/or speed of the production process of the fastening layer.

Furthermore, the manufacturing of the fastening layer made of non-woven fabric with the tangled fibres creates a "loops" structure (i.e., fiber tracts fixed to two opposite ends for being able to hook an anchoring unit) having high density (number of "loops" per surface unit). These "loops" are densely arranged, typically short and intimately connected and linked to each other.

According to the Applicant, the high density of "loops" allows, in case of a high number of hooking and unhooking cycles, a better maintenance over time of the capacity of the non-woven fabric of the fastening layer to hook the anchoring units with respect to the known structural layers with woven/punched/included loops system. In fact, according to the Applicant, the loops size of the known woven and/or punched and/or included loops systems would lead to the breaking and/or the unthreading of large-sized loops with consequent functional loss of the hooking capacity, and filling of the anchoring units clogged with threads/fibres and/or large-size threads/fibres tracts. Furthermore, in the known art, the dedicated process of weaving, punching and/or inclusion of the loops is (e.g., manually and/or by machinery) carried out in a step subsequent to the manufacturing of the structural layer and consequently a non-homogeneous distribution of the loops on the surface of the structural layer can occur. On the contrary, according to the Applicant, the high density of the "loops" structure of the non-woven fabric would allow having very small and close to each other "loops", thus causing, after the unhook, the breaking and/or the unthreading/stretching of a limited number of fibres and/or of very short fibres tracts, which make up the "loops". This would allow the non-woven fabric of the fastening layer, despite the breaking and/or the damaging of the "loops" previously engaged by the anchoring units, to maintain a high capability to hook the anchoring units since anyway there is a high number of new "loops" able to be engaged by the anchoring units at the time of the subsequent hook. Furthermore, a limited clogging of the anchoring units occurs, even after repeated unhooks/hooks of the composite layer, since the breaking of small-sized "loops" causes at most the detachment of a limited number of fibres and/or of very short fibres tracts.

In this way, it is possible both removing and replacing (e.g., for aesthetic and/or wear damages) the composite layer, without having also to replace the anchoring elements as they maintain their capacity to hook, and removing, cleaning and hooking again the composite layer since even the non-woven fabric of the fastening layer does not lose its capacity to hook the anchoring units.

According to the Applicant, the high density "loops" structure of the non-woven fabric further allows the maintenance of the aesthetic characteristics of the fastening layer following repeated hooking/unhooking cycles. In fact, the breaking and/or the unthreading/stretching of small-sized "loops" permits that no particularly evident aesthetic defects are created (e.g., fluff and/or free hair effect) on the surface of the fastening layer in contact with the anchoring units, and in this way the surface substantially maintains a smooth appearance over time.

Furthermore, according to the Applicant, the manufacturing of the fastening layer made of non-woven fabric with tangled structure of the fibres allows a containment of the surface area occupied by the anchoring elements while obtaining an effective hooking of the composite layer. This is due to the strong interaction between fastening layer made of non-woven fabric and anchoring unit, due to the aforesaid structure with randomly and partially loosely tangled fibres which creates a very high density of "loops" per surface unit. In this way, a high percentage of anchoring units participate in the hooking and it is therefore possible positioning the anchoring elements only at strategic points of the surface of the fastening layer. This leads to savings of the materials for manufacturing the anchoring elements and/or of the fixing times of the anchoring elements to the surface.

The terms above, below, superiorly, inferiorly refer to a direction normal to the covered surface, and oriented towards the surface.

The present invention in one or more of the aforesaid aspects can have one or more of the following preferred features.

Preferably said polymeric material is selected in the group: polyester, more preferably polyethylene-terephthalate (PET); polypropylene (PP), possibly recycled.

Preferably said tangled fibres have an average length greater than or equal to 30 mm, more preferably greater than or equal to 40 mm, and/or less than or equal to 90 mm, more preferably less than or equal to 80 mm.

Preferably each of said tangled fibres has a mass per unit of length (dtex) greater than or equal to 3 dtex, more preferably greater than or equal to 4 dtex, and/or less than or equal to 12 dtex, more preferably less than or equal to 8.

In this way, according to the Applicant, it is possible providing optimal ranges of fibres dimensions which can be processed for simply and/or rapidly manufacturing the non-woven fabric of the fastening layer.

Preferably said fastening layer has a thickness greater than or equal to 2 mm, more preferably greater than or equal to 3 mm, and/or less than or equal to 8 mm, more preferably less than or equal to 7 mm.

Preferably said fastening layer has a mass per unit area greater than or equal to 300 grams/m², more preferably greater than or equal to 350 grams/mm², and/or less than or equal to 800 grams/m², more preferably less than or equal to 700 grams/mm².

In this way, according to the Applicant, the structure of the fastening layer is sturdy and/or resistant, and suitable for mechanically and efficiently interacting with the anchoring units, while providing soundproofing and dampening properties to the fastening layer, allowing obtaining a more comfortable and/or ergonomic coating for the user. In fact, according to the Applicant, the dimensions, the weight and the structure (TNT) of the fastening layer allow the fastening layer to also perform the dampening and soundproofing functions, without needing the presence of a latex or polymeric foam mat (e.g., as disclosed in GB1546901A) interposed between the support layer and the structural layer and/or between anchoring elements and surface. The elimination of the mat therefore allows simplifying the overall structure of the coating for surfaces of the present invention.

Preferably said non-woven fabric made of tangled fibres is produced by needle-punching. Needle-punching means an industrial process wherein a fibres layer (firstly poorly linked to each other, such as staple fibres) undergoes a dense perforation by suitable needles (typically having protrusion). In this way the fibres dragged by the movement of the needles are tangled with each other, consequently obtaining a non-woven fabric with characteristics of mechanical resistance.

Preferably said non-woven fabric is needle-punched with a blow density greater than or equal to 550 blows/cm², more preferably greater than or equal to 600 blows/cm², and/or less than or equal to 900 blows/cm², more preferably less than or equal to 850 blows/cm². According to the Applicant, at the above-described preferred ranges of blow density of the needle-punching process, it is possible obtaining an appropriate compaction and interconnection of the tangled fibres (the more, the greater the blow density) with consequent desired linking strength and orientation of the tangled fibres. In fact, the compaction and interconnection of the tangled fibres creates a "loops" structure of the non-woven fabric suitably dense, homogeneous and of small-size. The resulting surfaces of the fastening layer are able to remain smooth over time, since at most there is a damaging/breaking of very small "loops" following repeated hooking/unhooking cycles. This allows an effective hooking between the non-woven fabric and the anchoring unit and/or a better maintenance over time of the capacity of the non-woven fabric to hook the anchoring units, as well as guaranteeing better aesthetic characteristics over time.

Exemplarily, the aforesaid blow densities are obtained by subjecting said non-woven fabric to a Dilour process. In this way, it is possible obtaining an even more compact and interconnected structure of the tangled fibres, obtaining surfaces of the velvety type, which further ensure the aforesaid properties of effective hook and maintenance over time of the capacity of the non-woven fabric to hook the anchoring units.

In one embodiment said non-woven fabric is needle-punched with a blow density by square centimetre (blows/cm²) greater than or equal to 80 blows/cm², more preferably greater than or equal to 120 blows/cm², and/or less than or equal to 240 blows/cm², more preferably less than or equal to 200 blows/cm². In this way, the non-woven fabric is cheaply produced (for example without the Dilour process) and at the same time with good properties of mechanical interaction with the anchoring units.

Preferably said non-woven fabric is needle-punched with a plurality of needles, wherein said needles have a length greater than or equal to 30 mm, more preferably greater than or equal to 40 mm, and/or less than or equal to 110 mm, less than or equal to 100 mm. Preferably each of said needles has along a respective main development direction a plurality of gripping portions in number greater than or equal to 6, more preferably greater than or equal to 8, and/or less than or equal to 12, more preferably less than or equal to 10, for tangling said fibres. Preferably during the needle-punching each of said needles protrudes from said fastening layer along a direction perpendicular to said fastening layer for a tract of maximum length greater than or equal to 5 mm, and/or less than or equal to 15 mm. In this way, according to the Applicant, needles having optimal characteristics for carrying out the needle-punching process for obtaining tangled fibres having an optimal interconnection and overlapping are provided, contributing to make the non-woven fabric with the desired properties of mechanical interaction with the anchoring units.

In one embodiment, said non-woven fabric is made of polyester fibres, more preferably of polyethylene-terephthalate (PET) fibres, wherein a percentage greater than or equal to 8%, more preferably greater than or equal to 12%, and/or less than or equal to 25% of said polyester fibres, more preferably of polyethylene-terephthalate (PET) fibres, has a coating of polyester, more preferably of polyethylene-terephthalate (PET), with low melting point.

In this embodiment, said non-woven fabric is thermoset. Preferably said non-woven fabric is thermoset at a temperature greater than or equal to 110°C, more preferably greater than or equal to 120°C, and/or less than or equal to 160°C, more preferably less than or equal to 150°C, for a time interval greater than or equal to 5 minutes, and/or less than or equal to 10 minutes.

In this way, it is possible obtaining a non-woven fabric that has an optimized structure for the interaction with the anchoring units. In fact, the bi-component structure of the non-woven fabric (i.e., simultaneous presence of classic polyester fibres and standard polyester fibres coated with polyester with low melting point) allows a fusion of the coating of polyester with low melting point at a temperature typically equal to about 110°C, while standard polyester fibres maintain their physical state unchanged (typically the melting temperature of classic polyester is about 230°C). The molten coating acts as an adhesive for the polyester fibres of which the non-woven fabric is made, increasing the compactness of the tangled fibres and globally providing greater structural compactness to the non-woven fabric. In this way, the "loops" structure of the non-woven fabric tends less to fray/stretch and/or break and consequently the non-woven fabric longer maintains over time its capacity to hook the anchoring units following repeated hooking/unhooking cycles of the composite layer to/from the anchoring elements. The thermoset process is particularly advantageous when the coating is intended for residential use (e.g., homes, hotels, offices), as the composite layer is subjected to a greater number of hooking/unhooking cycles to/from the anchoring elements (e.g., need to wash the composite layer) and consequently a greater reliability over time of the non-woven fabric is required.

Preferably said fixing layer is made of polymeric material, more preferably of styrene-butadiene rubber latex (SBR latex) and/or styrene-butadiene latex (SBL). According to the Applicant, these types of materials simplify the manufacturing of the fixing layer and provide the desired fixing properties.

Preferably said fixing layer has a thickness greater than or equal to 2,5 mm, more preferably greater than or equal to 3,5 mm, and/or less than or equal to 7,5 mm, more preferably less than or equal to 6,5 mm. According to the Applicant, this thickness range allows ensuring the appropriate and effective fixing between the support layer and the fastening layer.

Preferably said support layer is a non-woven fabric, more preferably spun-bond. Optionally said support layer can be needle-punched.

Preferably aid support layer is made of fibres of polymeric material, more preferably fibres of polyamide (PA) and/or polypropylene (PP). In this way, materials which can be easily worked into fibres are used, facilitating the manufacturing of the support layer. Preferably said support layer has a thickness greater than or equal to 0,5 mm, more preferably greater than or equal to 1 mm, and/or less than or equal to 3,5 mm, more preferably less than or equal to 3 mm.

Preferably said support layer has a mass per unit area greater than or equal to 70 grams/m², more preferably greater than or equal to 90 grams/m², and/or less than or equal to 130 grams/m², more preferably less than or equal to 110 grams/m².

In this way, the appropriate support characteristics and an appropriate sturdiness are ensured to the support layer, favouring the support to the textile threads woven therein. Preferably said textile threads are made of one or more of the following materials: wool, polyamide (PA). Preferably a percentage greater than or equal to 60%, and/or less than or equal to 90% of said textile threads is made of wool.

Preferably each of said textile threads has a mass per unit of length (dtex) greater than or equal to 3000 dtex, more preferably greater than or equal to 3500 dtex, and/or less than or equal to 6000 dtex, more preferably less than or equal to 5500 dtex. Preferably said textile threads have one or more of the following structures: velvety texture, curly texture.

Preferably said textile threads have respective end portions which protrude from said support layer. In this way, when the coating is correctly positioned on the surface, the end portions of the textile threads protruding from the support layer are arranged in the outermost position for creating the walkable surface.

Preferably an extension of each end portion of said textile threads is greater than or equal to 5 mm and/or less than or equal to 20 mm.

In this way, the coatings for surfaces have the desired aesthetic properties and/or are comfortable for the user.

Preferably said support layer and/or said fastening layer is/are arranged in direct contact with said fixing layer. In this way the composite layer of the carpet is rationally made, improving its sturdiness and/or compactness.

Preferably said composite layer is made by arranging one between said support layer and said fastening layer and by (e.g., directly) applying, on said one between said support layer and said fastening layer, a (e.g., liquid) mixture precursor of said fixing layer.

Preferably said composite layer is made by laying another between said support layer and said fastening layer on said mixture, on opposite side to said one between said support layer and said fastening layer.

Preferably said composite layer is made by thermosetting said mixture for transforming it into said fixing layer. The thermosetting of the mixture can be carried out before or after the laying of the other between the support layer and the fastening layer. In the first case the other between the support layer and the fastening layer is laid over the fixing layer (i.e., the thermosetting has already been carried out), in the second case the other between the support layer and the fastening layer is laid on the mixture (i.e., the thermosetting is subsequent to the laying of the fastening layer). According to the Applicant, in both cases, it is possible producing the composite layer having the desired structural properties.

According to the Applicant, the steps described in the three paragraphs above allow to simply, rapidly and cheaply manufacture the composite layer.

Preferably said mixture is thermoset at a temperature greater than or equal to 120°C, more preferably greater than or equal to 130°C, and/or less than or equal to 160°C, more preferably less than or equal to 145°C, for a time interval greater than or equal to 7 minutes, and/or less than or equal to 15 minutes. In this way, the thermosetting of the mixture is rapidly and efficiently obtained for suitably manufacturing the fixing layer. Preferably each plurality of anchoring units consists of hook elements and/or clip elements and/or mushroom head elements.

Preferably said first face of each anchoring element comprises a number of said anchoring units per unit area (unit/cm²) greater than or equal to 250 and/or less than or equal to 350.

In this way, the necessary anchoring units for allowing the detachable hooking between the composite layer and the anchoring elements are provided.

Preferably each anchoring element has strip-like shape having a width greater than or equal to 0,7 cm, more preferably greater than or equal to 1,2 cm, and/or less than or equal at 7 cm, more preferably less than or equal at 6 cm.

Preferably each strip has a length greater than or equal to 50 cm, more preferably greater than or equal to 70 cm, and/or less than or equal at 200 cm, more preferably less than or equal at 150 cm.

In this way, a limited encumbrance of the single anchoring elements is ensured.

Preferably said adhesive layer of each anchoring element is a pressure sensitive adhesive (PSA), for example selected in the group: 3M^{™} 9469, 3M^{™} 468, 3M^{™} 93430, 3M^{™} 9485 PC or Nitto 5925. In this way, the adhesive layer of each anchoring element is rationally and efficiently made. In fact, the use of pressure-sensitive adhesives allows avoiding a (partial and/or total) detachment of the anchoring elements from the surface, during the removal and/or replacement operations of the composite layer. Furthermore, according to the Applicant, the use of adhesives allows reducing the laying times of the coating, since, differently from using glues, no waiting times for the drying and/or ventilation times of the laying place of the coating are required.

Preferably said firmly fixing comprises positioning said anchoring elements with continuity along a perimeter of said surface.

In one embodiment, said surface has an area less than 40 m², more preferably less than 30 m². Preferably said firmly fixing comprises positioning said anchoring elements with continuity only along said perimeter.

In one embodiment, said surface has an area greater than 30 m², more preferably greater than 40 m². Preferably said firmly fixing comprises dividing said surface into a plurality of surface portions and positioning said anchoring elements with continuity along a respective perimeter of each surface portion. Preferably each surface portion has an area less than 40 m², more preferably less than 30 m². Preferably a sum of said surface portions is substantially equal to said surface.

Preferably a sum of a superficial extension of said first faces of said anchoring elements is less than or equal to 30%, more preferably less than or equal to 25%, of a superficial extension of said surface.

In this way, it is possible hooking the composite layer to the anchoring elements only at a perimetral portion (typically less than or equal to 30% of the total area of the fastening layer), reducing the interaction surface between the composite layer and the anchoring elements. This contributes limiting the aforesaid damaging of the structures of the coating for surfaces, while maintaining the detachable hooking effective and efficient.

Preferably said detachably hooking said composite layer to said anchoring elements is carried out subsequently to said firmly fixing.

In one embodiment said detachably hooking said composite layer to said anchoring elements is carried out previously to said firmly fixing.

### Brief description of the drawings

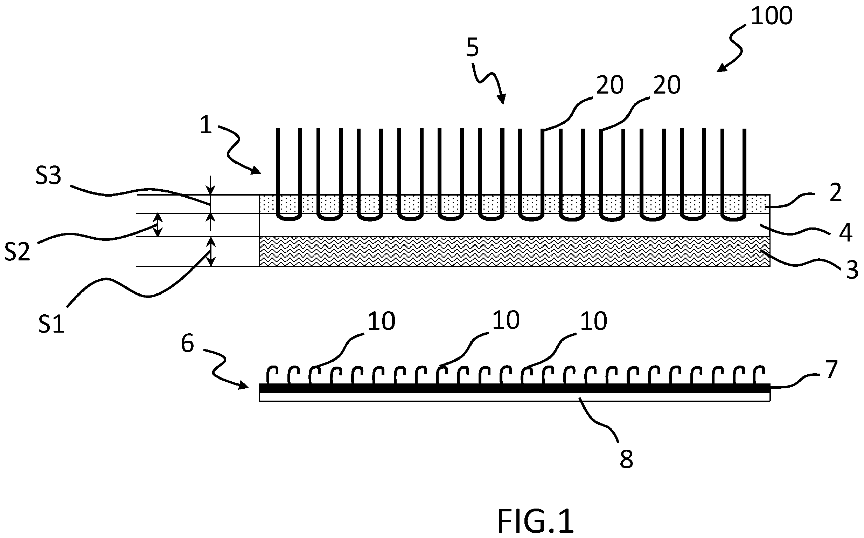

Figure 1 schematically shows a section of a coating for surfaces according to an embodiment of the present invention;
Figures 2a-2f schematically show subsequent steps of a manufacturing example of the composite layer of a coating for surfaces according to an embodiment of the present invention;
Figure 3 schematically shows a section of a surface covered with a coating for surfaces according to an embodiment of the present invention.
Figures 4a-4b schematically show respectively two different examples of laying methods of a coating for surfaces according to the present invention.

### Detailed description of some embodiments of the invention

The features and the advantages of the present invention will be further clarified by the following detailed description of some embodiments of the present invention, presented by way of non-limiting example, with reference to the attached figures.

In the figures the number 100 exemplarily indicates a coating for surfaces comprising a composite layer 1, which comprises a support layer 2, textile threads 5 woven by tufting in the support layer 2, a fastening layer 3 placed at opposite side of the support layer 2 with respect to the textile threads 5, and a fixing layer 4 interposed between the support layer 2 and the fastening layer 3 for fixing to each other the support layer 2 and the fastening layer 3. The coating 100 also comprises a plurality of anchoring elements 6, wherein each anchoring element 6 comprises a first face 7 covered by a plurality of anchoring units 10 for detachably hooking the anchoring element 6 with the fastening layer 3, and a second face covered by an adhesive layer 8 for firmly fixing the anchoring element 6 to the surface 700 (e.g., the floor and/or the walls).

Preferably the fastening layer 3 is a non-woven fabric, entirely made of tangled fibres of polymeric material.

Preferably the anchoring units 10 detachably and directly hook the tangled fibres of the fastening layer 3.

Exemplarily the support layer 2 and the fastening layer 3 are arranged in direct contact with the fixing layer 4.

Exemplarily the polymeric material is polyester.

Exemplarily a percentage equal to about 42% of the tangled fibres has a mass per unit of length (dtex) equal to about 6,7 dtex, a percentage equal to about 40% of the tangled fibres has a mass per unit of length (dtex) equal at about 13 dtex, and a percentage equal to about 18% of the tangled fibres has a mass per unit of length (dtex) equal to about 4,4 dtex.

Exemplarily the tangled fibres which make up the percentage equal to about 18% of the tangled fibres are made of polyester fibres having a coating of polyester with low melting point.

Exemplarily the tangled fibres have an average length equal to about 60 mm.

Exemplarily the fastening layer 3 has a thickness S1 equal to about 5 mm, and exemplarily a mass per unit area equal to about 350 grams/m².

Exemplarily the fixing layer 4 is made of styrene-butadiene rubber latex (SBR latex) or styrene-butadiene latex (SBL).

Exemplarily the fixing layer 4 has a thickness S2 equal to about 5 mm.

Exemplarily the support layer 2 is a non-woven fabric, exemplarily of the spun-bond type exemplarily made of fibres of polyamide (PA) and/or polypropylene (PP).

Exemplarily the support layer 2 has a thickness S3 equal to about 2 mm, and exemplarily a mass per unit area equal to about 100 grams/m².

Exemplarily the textile threads 5 are made of wool and/or polyamide (PA), exemplarily a percentage equal to about 80% thereof is made of wool.

Exemplarily each of the textile threads 5 has a mass per unit of length (dtex) equal to about 4500 dtex.

Exemplarily the textile threads 5 have a velvety texture.

In one not shown embodiment, the textile threads comprise a first plurality of threads having a velvety texture and a second plurality of threads having a curly texture. In this embodiment, the twisted curly threads averagely remain more proximal to the support layer and have different aesthetic characteristics with respect to the velvety threads.

Exemplarily the textile threads 5 have respective end portions 20 protruding from the support layer 2, and which exemplarily have an extension equal to about 8 mm.

Exemplarily the first face 7 of each anchoring element 6 comprises a number of anchoring units 10 per unit area (unit/cm²) equal to about 300, and exemplarily the anchoring units 10 are hook elements and/or mushroom head elements.

Exemplarily the adhesive layer 8 of each anchoring element 6 is a pressure sensitive adhesive (PSA), for example selected from 3M^{™} 9469, 3M^{™} 468, 3M^{™} 93430, 3M^{™} 9485 PC or Nitto 5925.

Exemplarily each anchoring element 6 has strip-like shape having a width equal to about 2 cm, and exemplarily a length equal to about 100 cm.

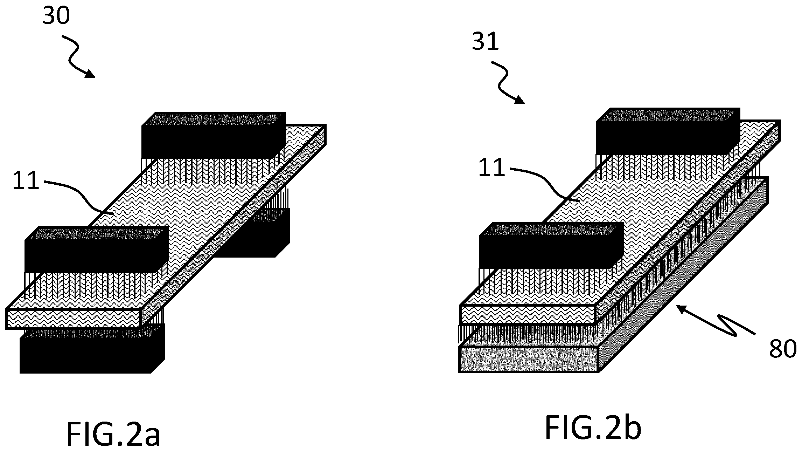

Figures 2a-2f schematically show, and purely by way of example, steps of a production process of the composite layer 1 of a coating for surfaces according to the present invention.

With reference to figure 2a-2b, two steps of the manufacturing process of the non-woven fabric of the fastening layer 3 are shown. Exemplarily the poorly linked polymeric fibres (typically in the form of staple) are initially tangled by a needle-punching step 30 (fig. 2a) exemplarily carried out on both sides of a fibres layer 11, and subsequently the needle-punched fibres layer 11 undergoes a Dilour process step 31 in which there is a perforation with needles at one face of the fibres layer 11 and the use of brushes 80 at the other face of the fibres layer 11 for creating a velvety surface. Typically, the face with velvety structure (e.g., the face of the fibres layer 11 facing the brushes 80 in figure 2b) will be the face of the fastening layer 3 which, by interacting with the anchoring units 10, will make the detachable hook between composite layer 1 and anchoring elements 6.

Exemplarily the needle-punching step 30 comprises perforating the fibres layer 11 with a blow density equal to about 160 blows/cm².

Exemplarily the Dilour process step 31 comprises perforating the fibres layer 11 with a blow density equal to about 700 blows/cm².

In one alternative embodiment the Dilour process step is not carried out.

Exemplarily, during the needle-punching step 30 and the Dilour process step 31, needles which exemplarily have a length equal to about 70 mm and which have a plurality of gripping portions along a respective main development direction are used. Exemplarily during the needle-punching 30 and the Dilour process, each of the needles protrudes from the fibres layer 11 along a vertical direction for a tract of length equal to about 9 mm.

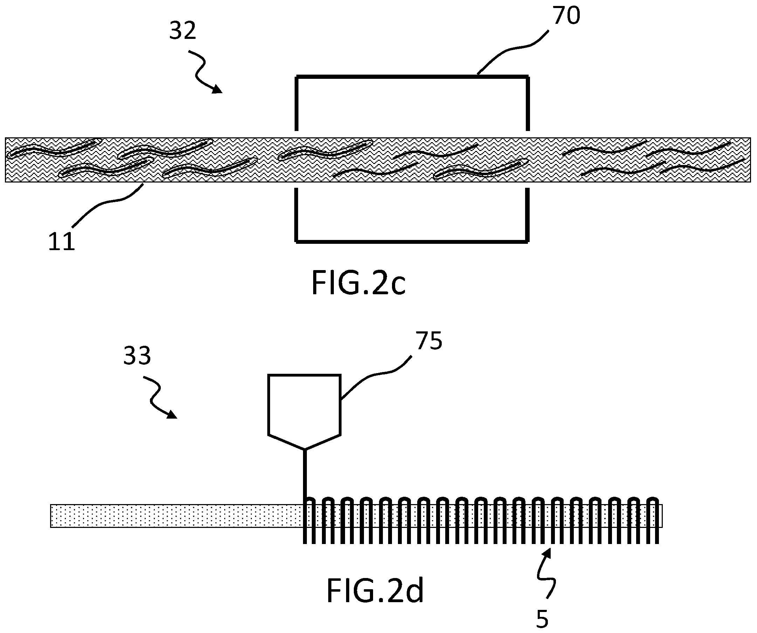

With reference to Figure 2c, a step of the manufacturing process of the fastening layer 3 following the needle-punching step 30 and the Dilour process step 31 is exemplarily shown. Exemplarily, the fibres layer 11 (which has a non-woven fabric structure as a consequence of the aforesaid needle-punching and Dilour processes) undergoes a thermoset step 32. The thermoset step 32 is carried out only if the fibres layer 11 comprises fibres with a bi-component structure (i.e., fibres coated with polymer having low melting point).

Exemplarily the thermoset step 32 is carried out inside an oven 70 thermostated at a temperature equal to about 140°C, for a time interval equal to about 8 minutes.

Figure 2d shows, at the tufting station 75 (for example comprising a tufting machine marketed by Cobble^{™}), the weaving by tufting step 33 of a yarn inside the support layer 2 for obtaining the artificial threads 5 which completely pass through the support layer 2.

Typically, weaving by tufting the yarn in the support layer 2 comprises making respective end portions 20 of the artificial threads 5 which protrude from the support layer 2, by cutting the yarn nooses.

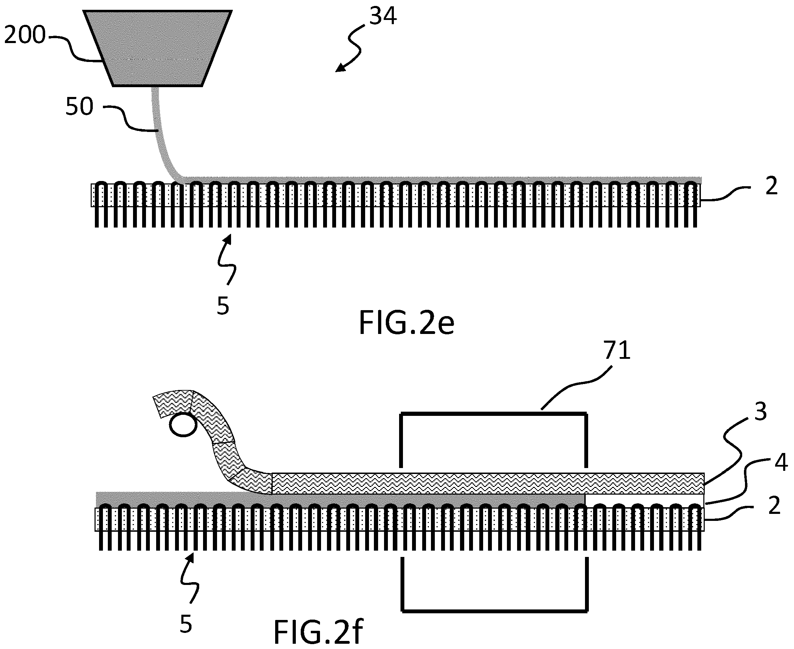

With reference to figures 2e-2f, two manufacturing steps of the composite layer 1 are exemplarily shown. Exemplarily the composite layer 1 is manufactured by arranging the support layer 2 subsequently to the tufting step 33 and by directly applying on the support layer 2 a liquid mixture 50 precursor of the fixing layer 4. The mixture 50 (e.g., LAITEX NF-5617 from LAIEX^{™}) is placed in the tank 200 at the spreading station 34. In one not shown embodiment, the liquid mixture 50 is directly applied on the fastening layer 3 instead of on the support layer 2.

Subsequently (fig. 2f) the process exemplarily comprises laying the fastening layer 3 (or the support layer 2, in the alternative embodiment) on the mixture 50, on opposite side with respect to the support layer 2 (or the fastening layer 3). Exemplarily simultaneously with the laying of the fastening layer 3 (or of the support layer 2), it is provided thermosetting the previously applied mixture 50 for transforming it into the fixing layer 4. Exemplarily thermosetting the mixture 50 is carried out in an oven 71 thermostated at a temperature equal to about 135°C for a time interval equal to about 10 minutes.

In one not shown embodiment, the thermosetting of the mixture 50 happens prior to the laying of the fastening layer 3 (or of the support layer 2, in the alternative embodiment) on the mixture 50.

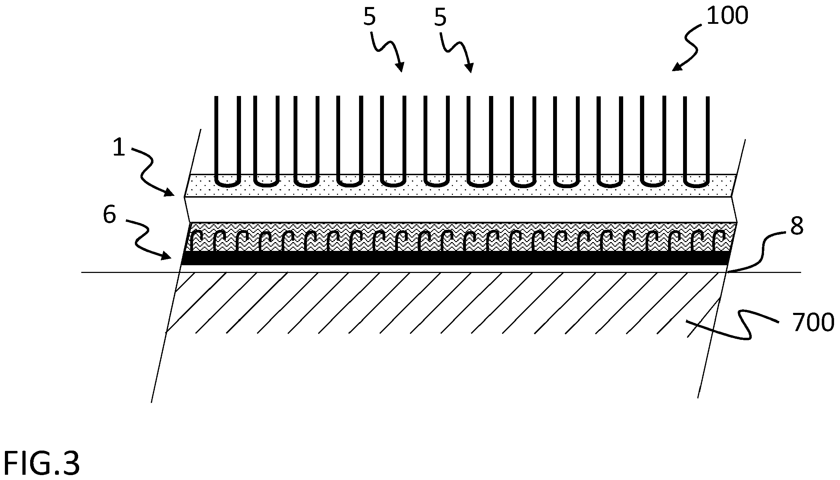

With reference to figure 3, a surface 700 covered with the coating 100 for surfaces is shown, wherein the anchoring elements 6 are firmly fixed to the surface 700 by the adhesive layers 8 and wherein the composite layer 1 is detachably hooked to the anchoring elements 6 by detachable hook between the anchoring units 10 and the tangled fibres of the fastening layer 3. Exemplarily the surface 700 is walkable.

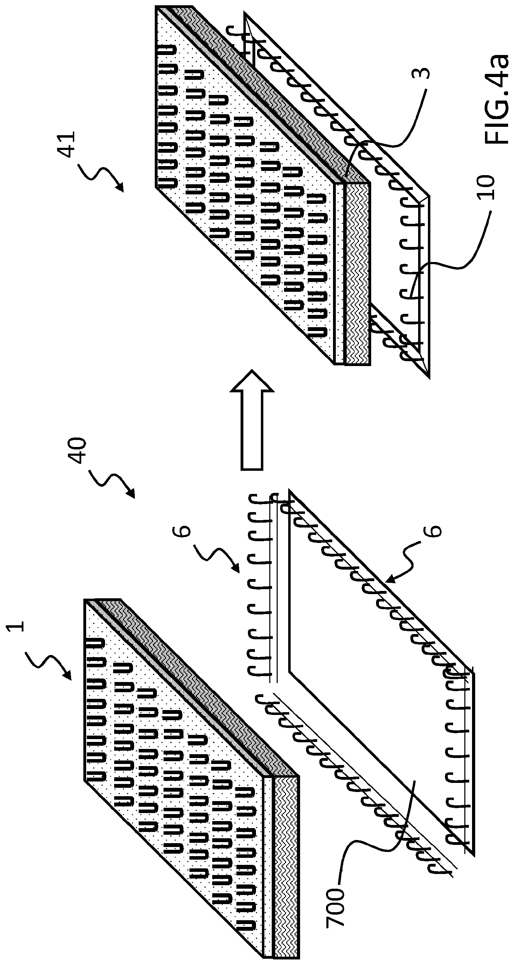

With reference to figures 4a-4b, two different examples of a laying method of the coating 100 for surfaces are exemplarily shown.

The laying method comprises:
- firmly fixing 40, by the adhesive layer 8, the anchoring elements 6 to the surface 700;
- detachably hooking 41 the composite layer 1 to the anchoring elements 6 by detachable hook between the anchoring units 10 and the tangled fibres of the fastening layer 3.

Exemplarily the fixing of the anchoring elements 6 to the surface 700 is carried out first, and subsequently the detachable hook of the composite layer 1 to the anchoring elements 6.

In one not shown embodiment, the detachable hook of the composite layer to the anchoring elements is carried out before of the fixing of the anchoring elements to the surface.

With reference to figure 4a, the surface 700 has an area exemplarily equal to 25 m², and exemplarily firmly fixing 40 comprises positioning the anchoring elements 6 with continuity only along a perimeter of the surface 700.

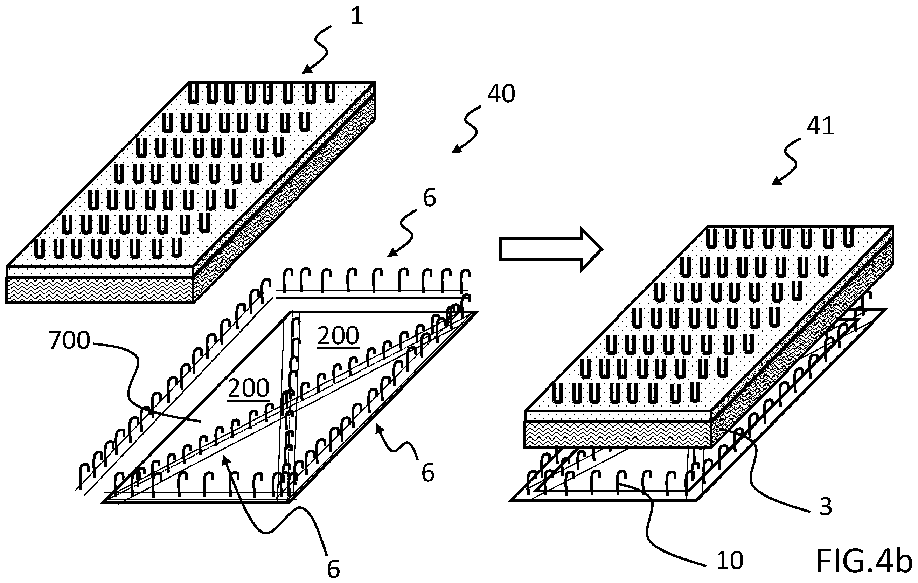

With reference to figure 4b, wherein the surface 700 has an area exemplarily equal to 70 m², firmly fixing 40 comprises dividing the surface 700 into a plurality (exemplarily equal to 4) of surface portions 200 and positioning the anchoring elements 6 so as to cover with continuity a respective perimeter of each surface portion 200, wherein exemplarily each surface portion 200 has an area equal to about 17 m². Purely by way of example, the surface 700 has been divided positioning some of the anchoring elements along two diagonal directions.

Exemplarily a sum of a superficial extension of the first faces 7 of the anchoring elements 6 is equal to about 15% of a superficial extension of the surface 700.

## Claims

1. Coating (100) for surfaces comprising:
- a composite layer (1) comprising:
- a support layer (2);
- textile threads (5) woven by tufting in said support layer (2);
- a fastening layer (3) placed at opposite side of said support layer (2) with respect to said textile threads (5);
- a fixing layer (4) interposed between said support layer (2) and said fastening layer (3) for fixing to each other said support layer (2) and said fastening layer (3);
and
- a plurality of anchoring elements (6), wherein each anchoring element (6) comprises a first face (7) covered by a plurality of anchoring units (10) for detachably hooking said anchoring element (6) with said fastening layer (3), and a second face covered by an adhesive layer (8) for firmly fixing said anchoring element (6) to said surface (700),
wherein said fastening layer (3) is a non-woven fabric, made of tangled fibres of polymeric material, and wherein said anchoring units (10) detachably and directly hook said tangled fibres of the fastening layer (3).

2. Coating (100) according to claim 1, wherein said polymeric material is selected in the group: polyester; polypropylene (PP), wherein said tangled fibres have an average length greater than or equal to 30 mm, and/or less than or equal to 90 mm, wherein each of said tangled fibres has a mass per unit of length greater than or equal to 3 dtex, and/or less than or equal to 12 dtex.

3. Coating (100) according to any one of the previous claims, wherein said support layer (2) and/or said fastening layer (3) is/are arranged in direct contact with said fixing layer (4), wherein said fastening layer (3) has a thickness greater than or equal to 2 mm, and/or less than or equal to 8 mm, wherein said fastening layer (3) has a mass per unit area greater than or equal to 300 grams/m², and/or less than or equal to 800 grams/m², wherein said fixing layer (4) is made of polymeric material, wherein said fixing layer (4) has a thickness greater than or equal to 2,5 mm, and/or less than or equal to 7,5 mm, wherein said support layer (2) is a non-woven fabric, wherein said support layer (2) is made of fibres of polymeric material, preferably fibres of polyamide (PA) and/or polypropylene (PP), wherein said support layer (2) has a thickness greater than or equal to 0,5 mm, and/or less than or equal to 3,5 mm, and wherein said support layer (2) has a mass per unit area greater than or equal to 70 grams/m², and/or less than or equal to 130 grams/m².

4. Coating (100) according to any one of the previous claims, wherein said textile threads (5) are made of one or more of the following materials: wool, polyamide (PA), wherein a percentage greater than or equal to 60%, and/or less than or equal to 90% of said textile threads (5) is made of wool, wherein each of said textile threads (5) has a mass per unit of length greater than or equal to 3000 dtex, and/or less than or equal to 6000 dtex, wherein said textile threads (5) have one or more of the following structures: velvety texture, curly texture, wherein said textile threads (5) have respective end portions (20) which protrude from said support layer (2), and wherein an extension of each end portion (20) of said textile threads (5) is greater than or equal to 5 mm and/or less than or equal to 20 mm.

5. Coating (100) according to any one of the previous claims, wherein said non-woven fabric made of tangled fibres is produced by needle-punching, wherein said non-woven fabric is needle-punched with a blow density greater than or equal to 550 blows/cm², and/or less than or equal to 900 blows/cm², wherein said non-woven fabric is needle-punched with a plurality of needles, wherein said needles have a length greater than or equal to 30 mm, and/or less than or equal to 110 mm, wherein each of said needles has along a respective main development direction a plurality of gripping portions in number greater than or equal to 6 and/or less than or equal to 12 for tangling said fibres, and wherein during the needle-punching each of said needles protrudes from said fastening layer (3) along a direction perpendicular to said fastening layer (3) for a tract of maximum length greater than or equal to 5 mm, and/or less than or equal to 15 mm.

6. Coating (100) according to any one of the previous claims, wherein said non-woven fabric is made of polyester fibres wherein a percentage greater than or equal to 8% and/or less than or equal to 25% of said polyester fibres has a coating of polyester with low melting point, wherein said non-woven fabric is thermoset, and wherein said non-woven fabric is thermoset at a temperature greater than or equal to 110°C and/or less than or equal to 160°C for a time interval greater than or equal to 5 minutes, and/or less than or equal to 10 minutes.

7. Coating (100) according to any one of the previous claims, wherein each plurality of anchoring units (10) consists of hook elements and/or clip elements and/or mushroom head elements, wherein said first face (7) of each anchoring element (6) comprises a number of said anchoring units (10) per unit area greater than or equal to 250 and/or less than or equal to 300, wherein each anchoring element (6) has strip-like shape having a width greater than or equal to 0,7 cm and/or less than or equal at 7 cm, wherein each strip has a length greater than or equal to 50 cm and/or less than or equal to 200 cm, wherein said adhesive layer (8) of each anchoring element (6) is a pressure sensitive adhesive, and wherein a sum of a superficial extension of said first faces (7) of said anchoring elements (6) is less than or equal to 30% of a superficial extension of said surface (700).

8. Laying method of a coating (100) for surfaces according to any one of the previous claims, the laying method comprising:
- firmly fixing (40), by said adhesive layer (8), said anchoring elements (6) to said surface (700);
- detachably hooking (41) said composite layer (1) to said anchoring elements (6) by detachable hook between said anchoring units (10) and said tangled fibres of the fastening layer (3).

9. Method according to claim 8, wherein said detachably hooking (41) said composite layer (1) to said anchoring elements (6) is carried out subsequently to said firmly fixing (40), wherein said surface (700) has an area less than 40 m², and wherein said firmly fixing (40) comprises positioning said anchoring elements (6) with continuity only along a perimeter of said surface (700), or
wherein said surface (700) has an area greater than or equal to 40 m², wherein said firmly fixing (40) comprises dividing said surface (700) into a plurality of surface portions (200) and positioning said anchoring elements (6) with continuity along a respective perimeter of each surface portion (200), and wherein each surface portion (200) has an area less than 40 m².

10. Surface (700) covered with a coating (100) for surfaces according to any one of claims 1 to 7, wherein said anchoring elements (6) are firmly fixed to said surface (700) by said adhesive layers (8) and wherein said composite layer (1) is detachably hooked to said anchoring elements (6) by detachable hook between said anchoring units (10) and said tangled fibres of said fastening layer (3), and wherein said surface (700) is walkable.
